# EUROPÄISCHE PATENTSCHRIFT

(11) **EP 2 898 024 B1**
(45) Veröffentlichungstag und Bekanntmachung des Hinweises auf die Patenterteilung: **09.01.2019**
(21) Anmeldenummer: 13765739.1
(22) Anmeldetag: 20.09.2013
(51) Int. Cl.: C09D 4/06, C09D 175/00

(54) **VERFAHREN ZUR HERSTELLUNG UND AUSBESSERUNG EINER FARB- UND/ODER EFFEKTGEBENDEN MEHRSCHICHTIGEN LACKIERUNG**
METHOD FOR PRODUCING AND REPAIRING A MULTI-COAT COLOUR AND/OR EFFECT PAINT SYSTEM
PROCÉDÉ DE PRODUCTION ET DE RETOUCHE D'UNE PEINTURE MULTICOUCHE DE COULEUR ET/OU À EFFETS

(30) Priorität: 21.09.2012 EP 12185453; 21.09.2012 US 201261703798 P
(43) Veröffentlichungstag der Anmeldung: 29.07.2015
(73) Patentinhaber: BASF Coatings GmbH, 48165 Münster (DE)
(72) Erfinder: STEINMETZ, Bernhard, 97535 Rütschenhausen (DE); MATURA, Michael, 97318 Kitzingen (DE); GÖB, Bianca, 97440 Werneck (DE); HOFFMANN, Peter, 48308 Senden (DE)
(74) Vertreter: BASF IP Association
(86) Internationale Anmeldenummer: PCT/EP2013/069609
(87) Internationale Veröffentlichungsnummer: WO 2014/044814

(56) Entgegenhaltungen:
- US-A- 2 915 496
- US-A- 5 368 944
- US-A- 5 792 806
- US-A1- 2003 175 434

## Beschreibung

Die Erfindung betrifft ein Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Die Erfindung betrifft weiterhin eine farb- und/oder effektgebende mehrschichtige Lackierung, welche durch das oben bezeichnete Verfahren herstellbar ist, sowie ein Verfahren zum Ausbessern von Fehlstellen auf der besagten farb- und/oder effektgebenden mehrschichtigen Lackierung, bei dem
(1) ein pigmentierter wässriger Basislack auf die Fehlstelle aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Die Erfindung betrifft außerdem pigmentierte wässrige Basislacke, die zur Herstellung von farb- und/oder effektgebenden mehrschichtigen Lackierungen geeignet sind sowie die Verwendung von Phosphiten in pigmentierten wässrigen Basislacken.

Das oben beschriebene Verfahren ist bekannt (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) und wird beispielsweise in großem Umfang sowohl für die Erstlackierung (OEM) als auch für die Reparaturlackierung von Automobilkarossen eingesetzt.
Der Einsatz von Phosphiten in Beschichtungssystemen ist grundsätzlich bekannt. Die JP 10028924 beschäftigt sich beispielsweise mit der Herabsetzung der Vergilbung von Beschichtungsmittelzusammensetzungen für die Beschichtung von Stoßdämpfern. Es wird der Einsatz von Phosphiten in lösemittelbasierten Beschichtungssystemen beschrieben. In US 5 792 806, US 5 368 944, US 2003/175434 und US 2 915 496 werden Phosphatverbindungen und deren Verwendungen in Lackierung oder Schäume beschrieben. Mit dem in Rede stehenden sogenannten basecoat/clearcoat-Verfahren werden im Nass-in-nass Verfahren farb- und/oder effektgebende mehrschichtige Lackierungen erhalten. Insbesondere bei der Automobilserienlackierung können Fehler in der resultierenden Lackierung auftreten. Sind Fehler auf dieser - der sogenannten Originallackierung - zu erkennen, so wird die Originallackierung ausgebessert, d.h. repariert. Weist die Originallackierung beispielsweise großflächig Fehlstellen auf, so wird die gesamte Karosse oder zumindest ein entsprechender Teil repariert, also ein zweites Mal lackiert. Sind nur kleine Fehlstellen auszubessern, so wird nicht die ganze Karosse, sondern nur der sogenannte "Spot" repariert. Dieser Prozeß wird "Spot Repair" genannt. Die entsprechende Lackierung muß anschließend gegenüber Feuchtigkeitsbelastung stabil sein, d.h. es darf nach dem sogenannten Klimatest nach beispielsweise EN ISO 6270-2 keinerlei Quellung und Blasenbildung zu beobachten sein. Die oben genannten Fehler Quellung und Blasenbildung werden auch als reversieble Fehler bezeichnet, da sie nach einer entsprechenden Schwitzwasserbelastung im Zuge einer sich anschließenden Regeneration wieder verschwinden können.
Die der vorliegenden Erfindung zugrunde liegende Aufgabenstellung besteht somit in der Bereitstellung eines Verfahrens der oben beschrieben Art mit dem farb- und/oder effektgebende mehrschichtige Lackierungen erhältlich sind, die gegenüber den Lackierungen des Standes der Technik eine verbesserte Eignung des Lacks für die Reparaturlackierung aufweisen. Ebenso soll ein Verfahren zur Verfügung gestellt werden, mit dem Fehlstellen auf den oben bezeichneten farb- und/oder effektgebenden mehrschichtigen Lackierungen ausgebessert werden können. Unter einer verbesserten Eignung des Lacks für die Reparaturlackierung ist zu verstehen, dass die ausgebesserten Lackierungen nach einer Schwitzwasserbelastung und einer Regenerationszeit von beispielsweise 24 Stunden keine der oben bezeichneten reversiblen Fehler wie Quellung und Blasenbildung mehr aufweisen.

Diese Aufgabe wird überraschenderweise dadurch gelöst, dass in Stufe (1) des oben beschriebenen basecoat/clearcoat-Verfahrens ein pigmentierter wässriger Basislack eingesetzt wird, der mindestens ein Phosphit der folgenden Strukturformel (I) enthält: 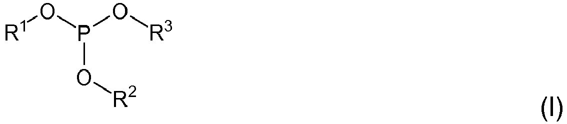 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des in Stufe (1) aufgetragenen wässrigen Basislacks beträgt.

In Stufe (1) des erfindungsgemäßen Verfahrens können im Prinzip alle bekannten wässrigen Basislacke eingesetzt werden, wenn sie wenigstens einen der oben definierten Phosphite enthalten und die Summe über die gewichtsprozentualen Anteile aller Phosphite gemäß Strukturformel (I) 0,1 bis 5 Gew.-% bezogen auf das Gesamtgewicht des in Stufe (1) aufgetragenen wässrigen Basislacks beträgt. Basislacke werden dann als "wässrig" bezeichnet, wenn sie 30 bis 70 Gew.-% Wasser, bezogen auf das Gesamtgewicht des Basislacks enthalten. Die Begriffe "wässriger Basislack" und "Wasserbasislack" werden in dieser Anmeldung als gleichbedeutende Begriffe verwendet.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des pigmentierten wässrigen Basislacks, liegen.

Im Rahmen der vorliegenden Erfindung werden bevorzugt Basislacke eingesetzt, die als Bindemittel physikalisch, thermisch oder thermisch und mit aktinischer Strahlung härtbare Bindemittel enthalten.

Der Begriff "(Meth)Acrylat" soll im Folgenden sowohl Acrylat als auch Methacrylat bezeichnen. D.h. ein entsprechendes Polymer ist daher sowohl aus Acrylaten als auch Methacrylaten aufgebaut. Es kann aber ebenso ausschließlich aus Acrylaten oder ausschließlich aus Methacrylaten aufgebaut sein.

Besonders bevorzugt ist als Bindemittel mindestens ein gesättigtes oder ungesättigtes Polyurethanharz enthalten. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Hitze initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeile 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind Basislacke bevorzugt, die thermisch oder thermisch und mit aktinischer Strahlung, also mittels "Dual Cure", härtbar sind. Insbesondere sind solche Basislacke bevorzugt, die als Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind insbesondere Melaminharze bevorzugt.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein mit olefinisch ungesättigten Monomeren verbundenes Polyurethanharz. Vorzugsweise werden als olefinisch ungesättigte Monomere Acrylat- und/oder Methacrylatgruppen-haltige Monomere an das Polyurethanharz (A) gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol (gemessen mittels Gelpermeationschromatographie gegen einen Polystyrolstandard; als Eluent wird Tetrahydrofuran eingesetzt), eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Wenn die bevorzugt eingesetzten Basislacke als selbstvernetzende Systeme vorliegen, dann liegt der Polyurethanharzgehalt bei 50 bis 100 Gew.-% bevorzugt 50 bis 90 Gew.-% und besonders bevorzugt 50 bis 80 Gew.-%, bezogen auf den filmbildenden Festkörper des Basislacks.

Unter filmbildendem Festkörper ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Im Falle von fremdvernetzenden Systemen liegt der Polyurethanharzgehalt zwischen 10 und 80 Gew.-%, bevorzugt zwischen 15 und 75 Gew.-% und besonders bevorzugt zwischen 20 und 70 Gew.-%, jeweils bezogen auf den filmbildenden Festkörper des Basislacks.

Das bevorzugt enthaltene Polyurethanharz besitzt vorzugsweise ein zahlenmittleres Molekulargewicht von 200 bis 30000 g/mol, bevorzugt von 2000 bis 20000 g/mol (gemessen mittels Gelpermeationschromatographie gegen einen Polystyrolstandard; als Eluent wird Tetrahydrofuran eingesetzt). Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Es ist erfindungswesentlich, dass die in Stufe (1) des erfindungsgemäßen Verfahrens eingesetzten wässrigen Basislacke mindestens ein Phosphit enthalten, das durch die Strukturformel (I) gekennzeichnet wird: 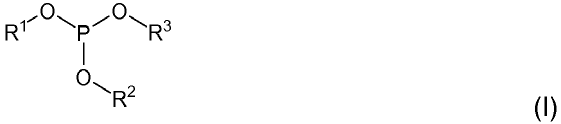 wobei mindestens einer der Reste R¹ bis R³ ausgewählt ist aus der Gruppe der aliphatischen Kohlenwasserstoffe.

Bevorzugt werden zwei oder alle Reste R¹ bis R³ ausgewählt aus der Gruppe der aliphatischen Kohlenwasserstoffe.
Für den Fall, dass nicht alle der Reste R¹ bis R³ ausgewählt sind aus der Gruppe der aliphatischen Kohlenwasserstoffe, werden die verbleibenden Reste bevorzugt ausgewählt aus der Gruppe der aromatischen Kohlenwasserstoffe. Bei den besagten aromatischen Kohlenwasserstoffen handelt es sich bevorzugt um eine Phenylgruppe. Bei den oben bezeichneten aliphatischen Kohlenwasserstoffresten handelt es sich bevorzugt jeweils um einen C₁-C₂₀-Rest, besonders bevorzugt um einen C₁-C₁₈-Rest und ganz besonders bevorzugt um einen C₁-C₁₆-Rest.

Es ist weiterhin bevorzugt, dass es sich bei dem aliphatischen Kohlenwasserstoff um einen linearen oder verzweigten Alkylrest handelt.
Ein solcher linearer oder verzweigter Alkylrest ist bevorzugt ein C₁-C₂₀-Rest, besonders bevorzugt ein C₁-C₁₈-Rest und ganz besonders bevorzugt ein C₁-C₁₆-Rest.
Bevorzugt ist der Alkylrest verzweigt. Besonders bevorzugt handelt es sich um einen Iso-Alkylrest der allgemeinen Formel

-(CH₂)ₙ-CH(CH₃)₂

mit n = 1 bis 17. Besonders bevorzugt ist n = 5 bis 14 und ganz besonders bevorzugt ist n = 6 bis 12. Beispielsweise handelt es sich um einen Isodecyl- oder um einen Isotridecylrest.

In einer ganz besonders bevorzugten Ausführungsform des erfindungsgemäß einzusetzenden Phosphits handelt es sich bei allen drei Resten R¹ bis R³ um einen Iso-Alkylrest der allgemeinen Formel

-(CH₂)ₙ-CH(CH₃)₂

mit n = 6 bis 12.

In einer weiteren ganz besonders bevorzugten Ausführungsform des erfindungsgemäß einzusetzenden Phosphits handelt es sich bei genau zwei der Reste R¹ bis R³ um einen Iso-Alkylrest der allgemeinen Formel

-(CH₂)ₙ-CH(CH₃)₂

mit n = 6 bis 12 und bei dem verbleibenden Rest um eine Phenylgruppe.

Das mindestens eine Phosphit wird vorzugsweise ausgewählt aus der Gruppe bestehend aus Triisodecylphosphit, Triisotridecylphosphit (= Mark® 305) und Phenyl-Diisodecylphosphit (= Mark® CH 300). Mark® 300 und Mark® 305 bezeichnen die Markennamen der Firma Galata Chemicals.

Die Summe über die gewichtsprozentualen Anteile aller Phosphite gemäß Strukturformel (I) beträgt 0,1 bis 5 Gew.-%, bevorzugt 0,1 bis 4,5 Gew.-% und besonders bevorzugt 0,15 bis 4 Gew.-% bezogen auf das Gesamtgewicht des in Stufe (1) aufgetragenen wässrigen Basislacks.

Beträgt die Summe über die gewichtsprozentualen Anteile aller Phosphite gemäß Strukturformel (I) weniger als 0,1 Gew.-% bezogen auf das Gesamtgewicht des in Stufe (1) aufgetragenen wässrigen Basislacks, so wird die der Erfindung zugrunde liegende Aufgabe nicht gelöst. Beträgt die Summe über die gewichtsprozentualen Anteile aller Phosphite gemäß Strukturformel (I) mehr als 5 Gew.-% bezogen auf das Gesamtgewicht des in Stufe (1) aufgetragenen wässrigen Basislacks, so treten Nachteile wie zum Beispiel eine Haftungsverschlechterung bei unterbrannten Aufbauten auf.

Die Summe über die gewichtsprozentualen Anteile aller Phosphite gemäß Strukturformel (I) beträgt 0,1 bis 5 Gew.-% bezogen auf das Gesamtgewicht des in Stufe (1) aufgetragenen wässrigen Basislacks. Für den Fall, dass bevorzugte Ausführungsformen des besagten Phosphits eingesetzt werden, beträgt die Summe über die gewichtsprozentualen Anteile aller bevorzugten Ausführungsformen des besagten Phosphits bevorzugt ebenfalls 0,1 bis 5 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphit ausschließlich bevorzugte Ausführungsformen des besagten Phosphits.

In einer bevorzugten Ausführungsform beträgt die Summe über die gewichtsprozentualen Anteile aller Phosphite gemäß Strukturformel (I) 0,1 bis 4,5 Gew.-% bezogen auf das Gesamtgewicht des in Stufe (1) aufgetragenen wässrigen Basislacks. Für den Fall, dass bevorzugte Ausführungsformen des besagten Phosphits eingesetzt werden, beträgt die Summe über die gewichtsprozentualen Anteile aller bevorzugten Ausführungsformen des besagten Phosphits bevorzugt ebenfalls 0,1 bis 4,5 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphit ausschließlich bevorzugte Ausführungsformen des besagten Phosphits.

In einer besonders bevorzugten Ausführungsform beträgt die Summe über die gewichtsprozentualen Anteile aller Phosphite gemäß Strukturformel (I) 0,15 bis 4 Gew.-% bezogen auf das Gesamtgewicht des in Stufe (1) aufgetragenen wässrigen Basislacks. Für den Fall, dass bevorzugte Ausführungsformen des besagten Phosphits eingesetzt werden, beträgt die Summe über die gewichtsprozentualen Anteile aller bevorzugten Ausführungsformen des besagten Phosphits bevorzugt ebenfalls 0,15 bis 4 Gew.-% bezogen auf das Gesamtgewicht des in Stufe (1) aufgetragenen wässrigen Basislacks. Besonders bevorzugt enthält der in Stufe (1) aufgetragene wässrige Basislack als Phosphit ausschließlich bevorzugte Ausführungsformen des besagten Phosphits.

Als Beispiel für in diesem Sinne bevorzugte Ausführungsformen des besagten Phosphits seien Phosphite der Strukturformel (I) genannt, wobei es sich bei allen drei Resten R¹ bis R³ um einen Iso-Alkylrest der allgemeinen Formel

-(CH₂)ₙ-CH(CH₃)₂

mit n = 6 bis 12 handelt.

Als ein anderes Beispiel für in diesem Sinne bevorzugte Ausführungsformen des besagten Phosphits seien Phosphite der Strukturformel (I) genannt, wobei es sich bei genau zwei der Reste R¹ bis R³ um einen Iso-Alkylrest der allgemeinen Formel

-(CH₂)ₙ-CH(CH₃)₂

mit n = 6 bis 12 und bei dem verbleibenden Rest um eine Phenylgruppe handelt.

Als ein weiteres Beispiel für in diesem Sinne bevorzugte Ausführungsformen des besagten Phosphits seien Triisodecylphosphit, Triisotridecylphosphit und Phenyl-Diisodecylphosphit genannt.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden.

Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX ® 1550 der Firma Cognis. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem C₁-C₆-Alkanol gebildet werden, so erhält man im wesentlichen nicht-assoziativ wirkende (Meth)acrylsäure-(Meth)acrylat-Copolymerisat-Verdicker, wie beispielsweise das oben genannte Viscalex HV30. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den C₁-C₆-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in den erfindungsgemäßen Basislackzusammensetzungen-Zusammensetzungen eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen. Typische Alkylgruppen sind beispielsweise Dodecyl oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den erfindungsgemäßen Basislack-Zusammensetzungen als Bindemittel eingesetzt werden können.

Der einzusetzende pigmentierte wässrige Basislack enthält bevorzugt zudem mindestens einen Polyester, insbesondere einen Polyester mit einem zahlenmittleren Molekulargewicht von 400 bis 5000 g/mol (gemessen mittels Gelpermeationschromatographie gegen einen Polystyrolstandard; als Eluat wird Tetrahydrofuran eingesetzt). Entsprechende Polyester werden in DE 4009858 in Spalte 6, Zeile 53 bis Spalte 7, Zeile 61 und Spalte 10, Zeile 24 bis Spalte 13, Zeile 3 beschrieben.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 10 bis 65 Gew.-% und insbesondere bevorzugt bei 15 bis 60 Gew.-%.

Unter Festkörpergehalt ist derjenige Gewichtsanteil zu verstehen, der unter festgelegten Bedingungen beim Eindampfen als Rückstand verbleibt. In der vorliegenden Anmeldung wurde der Festkörper nach DIN EN ISO 3251 bestimmt. Die Messdauer betrug 60 min bei 125°C.
Die Herstellung der erfindungsgemäß eingesetzten Basislacke kann unter Einsatz der für die Herstellung von Basislacken üblichen und bekannten Mischverfahren und Mischaggregate erfolgen.

Die erfindungsgemäßen Basislacke können sowohl als Einkomponenten(1K), Zweikomponenten(2K)- oder Mehrkomponenten(3K, 4K)-Systeme zur Anwendung kommen. Bevorzugt sind (1K)-Systeme.

In Einkomponenten(1K)-Systemen liegen Bindemittel und Vernetzungsmittel nebeneinander, d.h. in einer Komponente, vor. Voraussetzung hierfür ist, dass die beiden Bestandteile erst bei höheren Temperaturen und/oder bei Bestrahlen mit aktinischer Strahlung miteinander vernetzen.

In Zweikomponenten(2K)-Systemen liegen beispielsweise Bindemittel und Vernetzungsmittel getrennt voneinander in mindestens zwei Komponenten vor, die erst kurz vor der Applikation zusammengegeben werden. Diese Form wird dann gewählt, wenn Bindemittel und Vernetzungsmittel bereits bei Raumtemperatur miteinander reagieren. Lacke dieser Art werden vor allem zur Beschichtung thermisch empfindlicher Substrate, insbesondere in der Autoreparaturlackierung, angewandt.

Die Applikation des erfindungsgemäß eingesetzten pigmentierten wässrigen Basislacks auf ein Substrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden beispielsweise die bekannten Methoden wie Spritzen, Rakeln, Streichen, Giessen, Tauchen, Tränken, Träufeln oder Walzen angewendet. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. Beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Solche Klarlacke sind dem Fachmann bekannt.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch oder thermisch und mit aktinischer Strahlung bei Temperaturen von 80 bis 200°C.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Gegenstand der Erfindung ist zudem eine farb- und/oder effektgebende mehrschichtige Lackierung, welche nach dem erfindungsgemäßen Verfahren herstellbar ist. Die vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphit, gelten somit auch für die in Rede stehende farb- und/oder effektgebende mehrschichtige Lackierung. Dies gilt insbesondere auch für alle genannten bevorzugten, besonders bevorzugten und ganz besonders bevorzugten Merkmale.

Die vorliegende Erfindung betrifft weiterhin das oben beschriebene Verfahren zum Ausbessern von Fehlstellen auf den erfindungsgemäßen farb- und/oder effektgebenden mehrschichtigen Lackierungen, wobei in Stufe (1) ein pigmentierter wässriger Basislack eingesetzt wird, der mindestens ein Phosphit der folgenden Strukturformel (I) enthält: 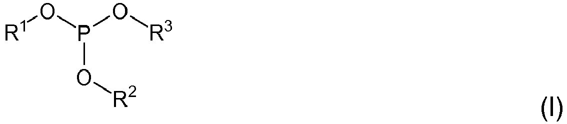 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des in Stufe (1) aufgetragenen wässrigen Basislacks beträgt.

Es ist bevorzugt, dass der in Stufe (1) des erfindungsgemäßen Verfahrens zum Ausbessern von Fehlstellen eingesetzte wässrige Basislack derselbe ist, wie der, welcher im erfindungsgemäßen Verfahren zur Herstellung einer farb- und/oder effektgebenden mehrschichtigen Lackierung eingesetzt wird. Die vorstehend genannten Ausführungen bezüglich des wässrigen Basislacks gelten somit auch für das in Rede stehende Verfahren zum Ausbessern von Fehlstellen auf einer farb- und/oder effektgebenden mehrschichtigen Lackierung. Dies gilt insbesondere auch für alle genannten bevorzugten, besonders bevorzugten und ganz besonders bevorzugten Merkmale.

Bekanntermaßen können die mit Hilfe des erfindungsgemäßen Verfahrens hergestellten farb- und/oder effektgebenden mehrschichtigen Lackierungen Fehlstellen aufweisen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann sind eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die besagten Fehlstellen lassen sich nach dem vorstehend beschriebenen erfindungsgemäßen Verfahren ausbessern.

Vor der Applikation des pigmentierten wässrigen Basislacks kann die Fehlstelle angeschliffen werden.

Die Applikation des pigmentierten wässrigen Basislacks auf die Fehlstelle in der Originallackierung erfolgt durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird, beziehungsweise noch kein vollständig vernetzter Lackfilm gebildet wird.

Anschließend wird auf die zu reparierende Stelle ein handelsüblicher Klarlack nach ebenfalls gängigen Methoden appliziert. Wie in der Reparaturlackierung allgemein üblich und dem Fachmann somit bekannt, werden bevorzugt solche Klarlacke eingesetzt, die bereits bei relativ niedrigen Temperaturen von 30 bis 80°C ausgehärtet werden können. Hierzu eignen sich insbesondere Zweikomponentenklarlacke.
Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Die Härtung erfolgt bevorzugt thermisch oder thermisch und mit aktinischer Strahlung bei Temperaturen von 30 bis 80°C.

Ein weiterer Gegenstand der Erfindung ist ein pigmentierter wässriger Basislack, welcher dadurch gekennzeichnet ist, dass der Basislack mindestens ein Phosphit der folgenden Strukturformel (I) enthält: 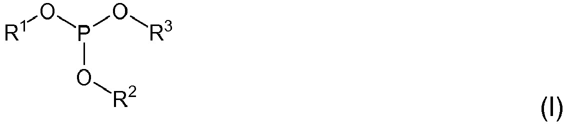 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des pigmentierten wässrigen Basislacks beträgt.

Dieser pigmentierte wässrige Basislack ist insbesondere zur Herstellung von farb- und/oder effektgebenden mehrschichtigen Lackierungen geeignet. Die vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphit, gelten somit auch für den in Rede stehenden pigmentierten wässrigen Basislack. Dies gilt insbesondere auch für alle vorstehend genannten bevorzugten, besonders bevorzugten und ganz besonders bevorzugten Merkmale.

Ein weiterer Gegenstand der vorliegenden Erfindung ist ferner die Verwendung von mindestens einem Phosphit in pigmentierten wässrigen Basislacken zur Verbesserung der Stabilität gegenüber Feuchtigkeitsbelastung, welche dadurch gekennzeichnet ist, dass der besagte Basislack mindestens ein Phosphit der folgenden Strukturformel (I) enthält: 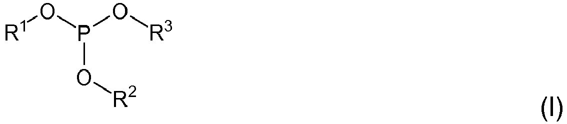 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des pigmentierten wässrigen Basislacks beträgt.

Unter einer Verbesserung der Stabilität gegenüber Feuchtigkeitsbelastung ist eine Verbesserung im Vergleich zu solchen pigmentierten wässrigen Basislacken zu verstehen, welche kein erfindungsgemäß einzusetzendes Phosphit enthalten. Die Feuchtigkeitsbelastung lässt sich beispielsweise mit Hilfe der EN ISO 6270-2 simulieren.

Alle vorstehend genannten Ausführungen bezüglich des wässrigen Basislacks, welcher beispielsweise in Stufe (1) des erfindungsgemäßen Verfahrens zur Herstellung einer farb- und/oder effektgebenden mehrschichtigen Lackierung eingesetzt wird sowie dem darin enthaltenden Phosphit, gelten somit auch für die erfindungsgemäße Verwendung mindestens eines Phosphits in pigmentierten wässrigen Basislacken. Dies gilt insbesondere auch für alle vorstehend genannten bevorzugten, besonders bevorzugten und ganz besonders bevorzugten Merkmale.

Bevorzugt wird das besagte Phosphit in der Reparaturlackierung zur Verbesserung der Stabilität gegenüber Feuchtigkeitsbelastung eingesetzt. Hierunter ist insbesondere zu verstehen, dass nach einer Feuchtigkeitsbelastung keine Fehler wie Quellung und Blasenbildung mehr auftreten.

Im Folgenden wird die Erfindung anhand von Beispielen erläutert.

### Beispiele

### 1. Herstellung eines silbernen Wasserbasislacks 1

Die in der Tabelle A unter "wässrige Phase" aufgeführten Komponenten werden in der angegebenen Reihenfolge zu einer wässrigen Mischung zusammengerührt. Im nächsten Schritt wird aus den unter "organische Phase" aufgeführten Komponenten eine organische Mischung hergestellt. Die organische Mischung wird zur wässrigen Mischung gegeben. Sodann wird 10 min lang gerührt und mit Hilfe von deionisiertem Wasser und Dimethylethanolamin auf einen pH Wert von 8 und eine Spritzviskosität von 58 mPas bei einer Scherbelastung von 1000/sec, gemessen mit einem Rotations-Viskosimeter (Gerät Rheomat RM 180 der Firma Mettler-Toledo) bei 23°C, eingestellt.

**Tabelle A**

| Komponente | Gewichtsteile |
|---|---|
| **Wässrige Phase** | |
| 3%ige Na-Mg-Schichtsilikatlösung | 26 |
| Deionisertes Wasser | 3 |
| Butylglykol | 1,75 |
| Polyurethanacrylat; hergestellt gemäß S. 7, Z. 55-S.8, Z. 23 der DE-A-4437535 | 4,5 |
| 50 Gew.-% ige Lösung DSX 1550 (BASF) Rheologiemittel | 0,6 |
| Polyester; hergestellt gemäß Beispiel D, Spalte 16, Z. 37-59 der DE-A-4009858 | 3,2 |
| Tensid S (BASF) | 0,3 |
| Butylglykol | 0,55 |
| Cymel 203; Melaminformaldehydharz, erhältlich von Cytec | 4,1 |
| 10%iges Dimethylethanolamin in Wasser | 0,3 |
| Deionisiertes Wasser | 6 |
| Polyurethanacrylat; hergestellt gemäß S. 19, Z. 44-S. 20, Z. 21 der DE-A-19948004 | 20,4 |
| Tensid S (BASF) | 1,6 |
| Butylglykol | 0,5 |
| 3 Gew.-%ige wässrige Viscalex HV 30 Lösung; Rheologiemittel, erhältlich von BASF, in Wasser | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| Polyester; hergestellt gemäß Beispiel D, Spalte 16, Z. 37-59 der DE-A-4009858 | 5 |

### Wasserbasislack E1:

Zur Herstellung des erfindungsgemäßen Wasserbasislacks E1 wurde der Wasserbasislack 1 mit 0,5 Gewichtsteilen von kommerziell erhältlichem Triisodecylphosphit versetzt.

### Wasserbasislack E2:

Zur Herstellung des erfindungsgemäßen Wasserbasislacks E2 wurde der Wasserbasislack 1 mit 1 Gewichtsteil von kommerziell erhältlichem Triisodecylphosphit versetzt.

### Wasserbasislack E3:

Zur Herstellung des erfindungsgemäßen Wasserbasislacks E3 wurde der Wasserbasislack 1 mit 2 Gewichtsteilen von kommerziell erhältlichem Triisodecylphosphit versetzt.

### Wasserbasislack E4:

Zur Herstellung des erfindungsgemäßen Wasserbasislacks E4 wurde der Wasserbasislack 1 mit 1 Gewichtsteil von kommerziell erhältlichem Triisotridecylphosphit versetzt.

### Wasserbasislack E5:

Zur Herstellung des erfindungsgemäßen Wasserbasislacks E5 wurde der Wasserbasislack 1 mit 1 Gewichtsteil von kommerziell erhältlichem Phenyl-Diisodecylphosphit versetzt.

**Tabelle 1: Zusammensetzungen der Wasserbasislacke 1 und E1 bis E5**

| **WBL** | **[Gew.-%]** | **Phosphit** |
|---|---|---|
| 1 | -- | -- |
| E1 | 0,5 | Triisodecylphosphit |
| E2 | 1 | Triisodecylphosphit |
| E3 | 2 | Triisodecylphosphit |
| E4 | 1 | Triisotridecylphosphit (= Mark CH 305) |
| E5 | 1 | Phenyl-Diisodecylphosphit (= Mark CH 300) |

Die Gewichtsprozentangaben in Tabelle 1 beziehen sich auf den Anteil des Phosphits im jeweiligen Wasserbasislack.

### Vergleichsversuch zwischen Wasserbasislack 1 und den Wasserbasislacken E1 bis E5

Zur Bestimmung der Stabilität gegen das Auftreten von Blasen und Quellungen nach Schwitzwasserlagerung wurden die Mehrschichtlackierungen nach der folgenden allgemeinen Vorschrift hergestellt:
Ein mit einer Standard-KTL (Cathoguard® 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der Wasserbasislack wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss® 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der Wasserbasislack auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet.

Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach EN ISO 6270-2 gelagert. Anschließend wurden die Bleche direkt und 24 Stunden nach Entnahme aus der Klimakammer visuell bezüglich Blasenbildung und Quellung untersucht. Die Ergebnisse bezüglich der visuellen Untersuchung der Prüfbleche direkt nach Entnahme aus der Klimakammer und 24 Stunden nach Entnahme aus der Klimakammer unterscheiden sich nicht. Die Ergebnisse für 24 Stunden sind in Tabelle 2 dargestellt.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit **m1** sehr wenige und **m5** sehr viele Blasen bezeichnet wurden.
- Die Größe der Blasen wurde durch eine Größenangabe ebenfalls von 1 bis 5 bewertet, wobei mit **g1** sehr kleine und **g5** sehr große Blasen bezeichnet wurden.
- Die Bezeichnung m0g0 bedeutet demzufolge eine blasenfreie Lackierung nach Lagerung in einer Klimakammer und stellt bezüglich Blasenbildung ein iO-Ergebnis dar.

**Tabelle 2: Blasen / Quellung von Wasserbasislack 1 und den Wasserbasislacken E1 bis E5**

| **WBL** | **Blasenbildung** | **Quellung** | **Beurteilung** |
|---|---|---|---|
| 1 | m5g1 | keine | niO |
| E1 | m0g0 | keine | iO |
| E2 | m0g0 | keine | iO |
| E3 | m0g0 | keine | iO |
| E4 | m0g0 | keine | iO |
| E5 | m0g0 | keine | iO |

Erklärung:
m = Menge der Blasen, d.h. Anzahl an Blasen
g = Größe der Blasen
iO = zufriedenstellendes Ergebnis
niO = nicht zufriedenstellendes Ergebnis

Die Ergebnisse bestätigen, dass bei Einsatz der erfindungsgemäßen Phosphite keine Blasen nach Schwitzwasserbelastung mehr auftreten und keine Quellungen mehr sichtbar sind.

## Patentansprüche

1. Verfahren zur Herstellung einer farb- und/oder effektgebenden mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, der mindestens ein Phosphit der folgenden Strukturformel (I) enthält: 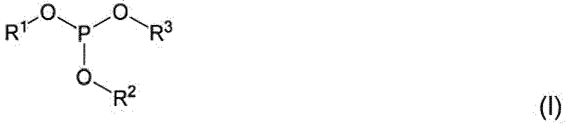 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des in Stufe (1) aufgetragenen wässrigen Basislacks beträgt, wobei für den Fall, dass nicht alle Reste R¹ bis R³ aus der Gruppe der aliphatischen Kohlenwasserstoffe ausgewählt sind, die verbleibenden Reste aus der Gruppe der aromatischen Kohlenwasserstoffe ausgewählt sind.

2. Verfahren nach Anspruch 1, **dadurch gekennzeichnet, dass** die Summe über die gewichtsprozentualen Anteile aller Phosphite gemäß Strukturformel (I) 0,1 bis 4,5 Gew.-% bezogen auf das Gesamtgewicht des in Stufe (1) aufgetragenen wässrigen Basislacks beträgt.

3. Verfahren nach mindestens einem der Ansprüche 1 und 2, **dadurch gekennzeichnet, dass** in Stufe (1) ein pigmentierter wässriger Basislack eingesetzt wird, der als Bindemittel mindestens ein gesättigtes oder ungesättigtes Polyurethanharz enthält.

4. Verfahren nach mindestens einem der Ansprüche 1 bis 3, **dadurch gekennzeichnet dass** in Stufe (1) ein pigmentierter wässriger Basislack eingesetzt wird, der mindestens ein Vernetzungsmittel ausgewählt aus der Gruppe bestehend aus Aminoplastharzen und blockierten oder unblockierten Polyisocyanaten enthält.

5. Verfahren nach mindestens einem der Ansprüche 1 bis 4, **dadurch gekennzeichnet, dass** es sich bei den besagten aliphatischen Kohlenwasserstoffen um einen C₁-C₂₀-Rest handelt.

6. Verfahren nach mindestens einem der Ansprüche 1 bis 5, **dadurch gekennzeichnet, dass** es sich bei den besagten aliphatischen Kohlenwasserstoffen jeweils um einen Iso-Alkylrest der allgemeinen Formel
-(CH₂)ₙ-CH(CH₃)₂
mit n = 1 bis 17 handelt.

7. Verfahren nach mindestens einem der Ansprüche 1 bis 6, **dadurch gekennzeichnet, dass** das mindestens eine Phosphit ausgewählt wird aus der Gruppe bestehend aus Triisodecylphosphit, Triisotridecylphosphit und Phenyl-Diisodecylphosphit

8. Farb- und/oder effektgebende mehrschichtige Lackierung, herstellbar nach dem Verfahren gemäß den Ansprüchen 1 bis 7.

9. Verfahren zum Ausbessern von Fehlstellen auf der farb- und/oder effektgebenden mehrschichtigen Lackierung gemäß Anspruch 8, bei dem
(1) ein pigmentierter wässriger Basislack auf die Fehlstelle aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack eingesetzt wird, der mindestens ein Phosphit der folgenden Strukturformel (I) enthält: 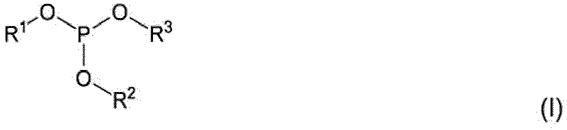 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des in Stufe (1) aufgetragenen wässrigen Basislacks beträgt, wobei für den Fall, dass nicht alle Reste R¹ bis R³ aus der Gruppe der aliphatischen Kohlenwasserstoffe ausgewählt sind, die verbleibenden Reste aus der Gruppe der aromatischen Kohlenwasserstoffe ausgewählt sind.

10. Verfahren nach Anspruch 9, **dadurch gekennzeichnet, dass** in Stufe (1) ein pigmentierter wässriger Basislack eingesetzt wird, der als Bindemittel mindestens ein gesättigtes oder ungesättigtes Polyurethanharz enthält.

11. Verfahren nach mindestens einem der Ansprüche 9 und 10, **dadurch gekennzeichnet dass** in Stufe (1) ein pigmentierter wässriger Basislack eingesetzt wird, der mindestens ein Vernetzungsmittel ausgewählt aus der Gruppe bestehend aus Aminoplastharzen und blockierten oder unblockierten Polyisocyanaten enthält.

12. Verfahren nach mindestens einem der Ansprüche 9 bis 11, **dadurch gekennzeichnet, dass** es sich bei den besagten aliphatischen Kohlenwasserstoffen um einen C₁-C₂₀-Rest handelt.

13. Verfahren nach mindestens einem der Ansprüche 9 bis 12, **dadurch gekennzeichnet, dass** das mindestens eine Phosphit ausgewählt wird aus der Gruppe bestehend aus Triisodecylphosphit, Triisotridecylphosphit und Phenyl-Diisodecylphosphit

14. Pigmentierter wässriger Basislack, **dadurch gekennzeichnet, dass** der Basislack mindestens ein Phosphit der folgenden Strukturformel (I) enthält: 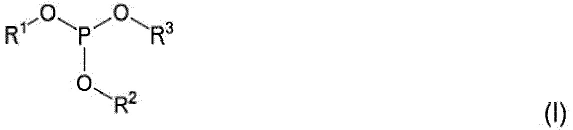 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des pigmentierten wässrigen Basislacks beträgt, wobei für den Fall, dass nicht alle Reste R¹ bis R³ aus der Gruppe der aliphatischen Kohlenwasserstoffe ausgewählt sind, die verbleibenden Reste aus der Gruppe der aromatischen Kohlenwasserstoffe ausgewählt sind.

15. Verwendung von mindestens einem Phosphit in pigmentierten wässrigen Basislacken zur Verbesserung der Stabilität gegenüber Feuchtigkeitsbelastung, **dadurch gekennzeichnet, dass** besagte Basislack mindestens ein Phosphit der folgenden Strukturformel (I) enthält: 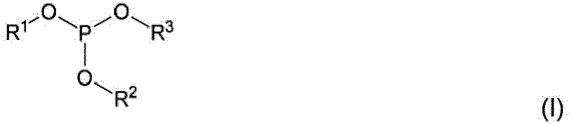 wobei mindestens einer der Reste R¹ bis R³ ausgewählt ist aus der Gruppe der aliphatischen Kohlenwasserstoffe und zudem die Summe über die gewichtsprozentualen Anteile aller Phosphite gemäß Strukturformel (I) 0,1 bis 5 Gew.-% bezogen auf das Gesamtgewicht des pigmentierten wässrigen Basislacks beträgt, wobei für den Fall, dass nicht alle Reste R¹ bis R³ aus der Gruppe der aliphatischen Kohlenwasserstoffe ausgewählt sind, die verbleibenden Reste aus der Gruppe der aromatischen Kohlenwasserstoffe ausgewählt sind.

## Claims

1. Method for producing a multicoat color and/or effect paint system, by
applying a pigmented aqueous basecoat material to a substrate,
forming a polymer film from the coating material applied in stage (1),
applying a clearcoat material to the resultant basecoat film, and subsequently
curing the basecoat film together with the clearcoat film,
**characterized in that** in stage (1) a pigmented aqueous basecoat material is used which comprises at least one phosphite of the following structural formula (I): 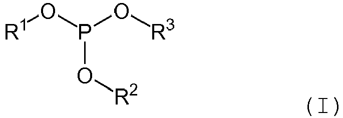 where at least one of the radicals R¹ to R³ is selected from the group of the aliphatic hydrocarbons and, furthermore, the sum total of the weight percentage fractions of all of the phosphites of structural formula (I) is 0.1% to 5% by weight, based on the total weight of the aqueous basecoat material applied in stage (1), wherein, where not all of the radicals R¹ to R³ are selected from the group of the aliphatic hydrocarbons, the remaining radicals are selected from the group of the aromatic hydrocarbons.

2. Method according to Claim 1, **characterized in that** the sum total of the weight percentage fractions of all of the phosphites of structural formula (I) is 0.1% to 4.5% by weight, based on the total weight of the aqueous basecoat material applied in stage (1).

3. Method according to at least one of Claims 1 and 2, **characterized in that** in stage (1) a pigmented aqueous basecoat material is used which comprises as binder at least one saturated or unsaturated polyurethane resin.

4. Method according to at least one of Claims 1 to 3, **characterized in that** in stage (1) a pigmented aqueous basecoat material is used which comprises at least one crosslinking agent selected from the group consisting of amino resins and blocked or nonblocked polyisocyanates.

5. Method according to at least one of Claims 1 to 4, **characterized in that** said aliphatic hydrocarbons comprise a C₁-C₂₀ radical.

6. Method according to at least one of Claims 1 to 5, **characterized in that** said aliphatic hydrocarbons each comprise an isoalkyl radical of the general formula
-(CH₂)ₙ-CH(CH₃)₂
with n = 1 to 17.

7. Method according to at least one of Claims 1 to 6, **characterized in that** the at least one phosphite is selected from the group consisting of triisodecyl phosphite, triisotridecyl phosphite and phenyl diisodecyl phosphite.

8. Multicoat color and/or effect paint system producible by Method according to Claims 1 to 7.

9. Method for repairing defects on the multicoat color and/or effect paint system according to Claim 8, by
applying a pigmented aqueous basecoat material to the defect,
forming a polymer film from the coating material applied in stage (1),
applying a clearcoat material to the resultant basecoat film and subsequently
curing the basecoat film together with the clearcoat film,
**characterized in that** in stage (1) a pigmented aqueous basecoat material is used which comprises at least one phosphite of the following structural formula (I): 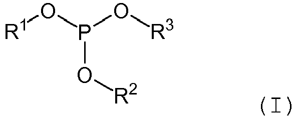 where at least one of the radicals R¹ to R³ is selected from the group of the aliphatic hydrocarbons and, furthermore, the sum total of the weight percentage fractions of all of the phosphites of structural formula (I) is 0.1% to 5% by weight, based on the total weight of the aqueous basecoat material applied in stage (1), wherein, where not all of the radicals R¹ to R³ are selected from the group of the aliphatic hydrocarbons, the remaining radicals are selected from the group of the aromatic hydrocarbons.

10. Method according to Claim 9, **characterized in that** in stage (1) a pigmented aqueous basecoat material is used which comprises as binder at least one saturated or unsaturated polyurethane resin.

11. Method according to at least one of Claims 9 and 10, **characterized in that** in stage (1) a pigmented aqueous basecoat material is used which comprises at least one crosslinking agent selected from the group consisting of amino resins and blocked or nonblocked polyisocyanates.

12. Method according to at least one of Claims 9 to 11, **characterized in that** said aliphatic hydrocarbons comprise a C₁-C₂₀ radical.

13. Method according to at least one of Claims 9 to 12, **characterized in that** the at least one phosphite is selected from the group consisting of triisodecyl phosphite, triisotridecyl phosphite and phenyl diisodecyl phosphite.

14. Pigmented aqueous basecoat material **characterized in that** the basecoat material comprises at least one phosphite of the following structural formula (I): 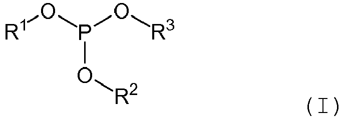 where at least one of the radicals R¹ to R³ is selected from the group of the aliphatic hydrocarbons and, furthermore, the sum total of the weight percentage fractions of all of the phosphites of structural formula (I) is 0.1% to 5% by weight, based on the total weight of the pigmented aqueous basecoat material, wherein, where not all of the radicals R¹ to R³ are selected from the group of the aliphatic hydrocarbons, the remaining radicals are selected from the group of the aromatic hydrocarbons.

15. Use of at least one phosphite in pigmented aqueous basecoat materials for improving the stability toward moisture exposure, **characterized in that** said basecoat material comprises at least one phosphite of the following structural formula (I): 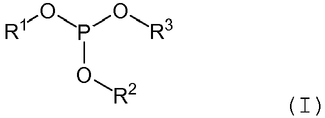 where at least one of the radicals R¹ to R³ is selected from the group of the aliphatic hydrocarbons and, furthermore, the sum total of the weight percentage fractions of all of the phosphites of structural formula (I) is 0.1% to 5% by weight, based on the total weight of the pigmented aqueous basecoat material, wherein, where not all of the radicals R¹ to R³ are selected from the group of the aliphatic hydrocarbons, the remaining radicals are selected from the group of the aromatic hydrocarbons.

## Revendications

1. Procédé de fabrication d'un vernissage multicouche colorant et/ou à effet, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent, **caractérisé en ce qu'**à l'étape (1), un vernis de base aqueux pigmenté est utilisé, qui contient au moins un phosphite de la formule structurale (I) suivante : 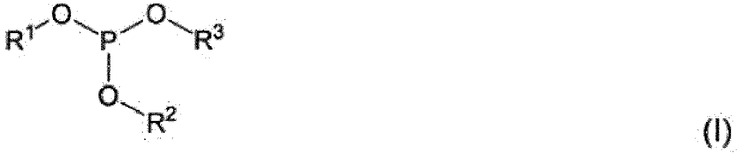 dans laquelle au moins un des radicaux R¹ à R³ est choisi dans le groupe des hydrocarbures aliphatiques, et, par ailleurs, la somme des proportions en pourcentage en poids de tous les phosphites selon la formule structurale (I) est de 0,1 à 5 % en poids par rapport au poids total du vernis de base aqueux appliqué à l'étape (1), dans laquelle, au cas où les radicaux R¹ à R³ ne sont pas tous choisis dans le groupe des hydrocarbures aliphatiques, les radicaux restants sont choisis dans le groupe des hydrocarbures aromatiques.

2. Procédé selon la revendication 1, **caractérisé en ce que** la somme des proportions en pourcentage en poids de tous les phosphites selon la formule structurale (I) est de 0,1 à 4,5 % en poids par rapport au poids total du vernis de base aqueux appliqué à l'étape (1).

3. Procédé selon au moins l'une quelconque des revendications 1 et 2, **caractérisé en ce qu'**à l'étape (1), un vernis de base aqueux pigmenté est utilisé, qui contient en tant que liant au moins une résine de polyuréthane saturée ou insaturée.

4. Procédé selon au moins l'une quelconque des revendications 1 à 3, **caractérisé en ce qu'**à l'étape (1), un vernis de base aqueux pigmenté est utilisé, qui contient au moins un agent de réticulation choisi dans le groupe constitué par les résines aminoplaste et les polyisocyanates bloqués ou non bloqués.

5. Procédé selon au moins l'une quelconque des revendications 1 à 4, **caractérisé en ce que** lesdits hydrocarbures aliphatiques sont constitués par un radical C₁-C₂₀.

6. Procédé selon au moins l'une quelconque des revendications 1 à 5, **caractérisé en ce que** lesdits hydrocarbures aliphatiques sont constitués à chaque fois par un radical iso-alkyle de forme générale
-(CH₂)ₙ-CH(CH₃)₂
avec n = 1 à 17.

7. Procédé selon au moins l'une quelconque des revendications 1 à 6, **caractérisé en ce que** l'au moins un phosphite est choisi dans le groupe constitué du triisodécylphosphite, du triisotridécylphosphite et du phényle-diisodécylphoshite.

8. Vernissage multicouche colorant et/ou à effet, pouvant être fabriqué par le procédé selon les revendications 1 à 7.

9. Procédé de retouche de défauts sur le vernissage multicouche colorant et/ou à effet selon la revendication 8, selon lequel
(1) un vernis de base aqueux pigmenté est appliqué sur le défaut,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent, **caractérisé en ce qu'**à l'étape (1), un vernis de base aqueux pigmenté est utilisé, qui contient au moins un phosphite de la formule structurale (I) suivante : 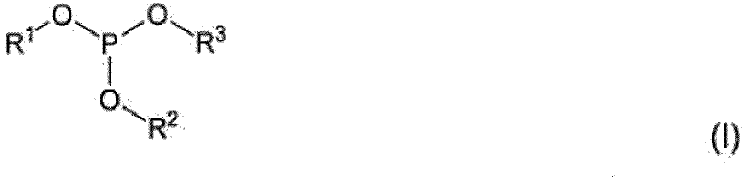 dans laquelle au moins un des radicaux R¹ à R³ est choisi dans le groupe des hydrocarbures aliphatiques, et, par ailleurs, la somme des proportions en pourcentage en poids de tous les phosphites selon la formule structurale (I) est de 0,1 à 5 % en poids par rapport au poids total du vernis de base aqueux appliqué à l'étape (1) dans laquelle, au cas où les radicaux R1 à R3 ne sont pas tous choisis dans le groupe des hydrocarbures aliphatiques, les radicaux restants sont choisis dans le groupe des hydrocarbures aromatiques.

10. Procédé selon la revendication 9, **caractérisé en ce qu'**à l'étape (1), un vernis de base aqueux pigmenté est utilisé, qui contient en tant que liant au moins une résine de polyuréthane saturée ou insaturée.

11. Procédé selon au moins l'une quelconque des revendications 9 et 10, **caractérisé en ce qu'**à l'étape (1), un vernis de base aqueux pigmenté est utilisé, qui contient au moins un agent de réticulation choisi dans le groupe constitué par les résines aminoplaste et les polyisocyanates bloqués ou non bloqués.

12. Procédé selon au moins l'une quelconque des revendications 9 à 11, **caractérisé en ce que** lesdits hydrocarbures aliphatiques sont constitués par un radical C₁-C₂₀.

13. Procédé selon au moins l'une quelconque des revendications 9 à 12, **caractérisé en ce que** l'au moins un phosphite est choisi dans le groupe constitué du triisodécylphosphite, du triisotridécylphosphite et du phényle-diisodécylphoshite.

14. Vernis de base aqueux pigmenté, **caractérisé en ce que** le vernis de base contient au moins un phosphite de la formule structurale (I) suivante : 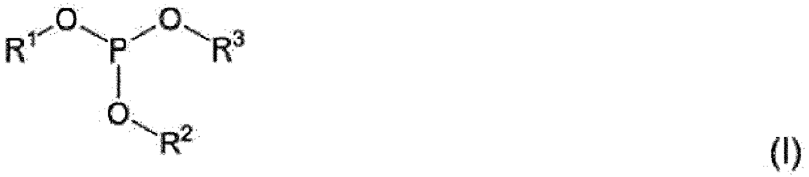 dans laquelle au moins un des radicaux R¹ à R³ est choisi dans le groupe des hydrocarbures aliphatiques, et, par ailleurs, la somme des proportions en pourcentage en poids de tous les phosphites selon la formule structurale (I) est de 0,1 à 5 % en poids par rapport au poids total du vernis de base aqueux pigmenté, dans laquelle, au cas où les radicaux R¹ à R³ ne sont pas tous choisis dans le groupe des hydrocarbures aliphatiques, les radicaux restants sont choisis dans le groupe des hydrocarbures aromatiques.

15. Utilisation d'au moins un phosphite dans des vernis de base aqueux pigmentés pour améliorer la stabilité vis-à-vis de l'humidité, **caractérisée en ce que** ledit vernis de base contient au moins un phosphite de la formule structurale (I) suivante : 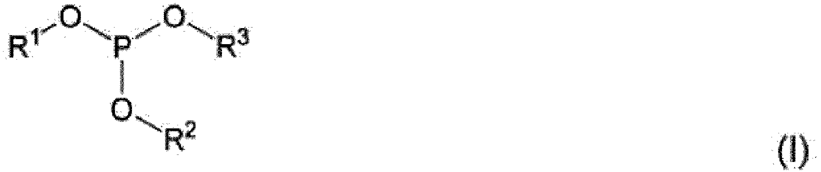 dans laquelle au moins un des radicaux R¹ à R³ est choisi dans le groupe des hydrocarbures aliphatiques, et, par ailleurs, la somme des proportions en pourcentage en poids de tous les phosphites selon la formule structurale (I) est de 0,1 à 5 % en poids par rapport au poids total du vernis de base aqueux pigmenté, dans laquelle, au cas où les radicaux R1 à R3 ne sont pas tous choisis dans le groupe des hydrocarbures aliphatiques, les radicaux restants sont choisis dans le groupe des hydrocarbures aromatiques.
